# EUROPEAN PATENT APPLICATION

(11) **EP 2 369 527 A1**
(43) Date of publication of application: **28.09.2011**
(21) Application number: 10002902.4
(22) Date of filing: 18.03.2010
(51) Int. Cl.: G06K 19/073

(54) **Secure RFID tags, communication systems using the same, and method of manufacturing a secure RFID tag**

(71) Applicant: SIEMENS AKTIENGESELLSCHAFT, 80333 München (DE)
(72) Inventor: Boulila, Naoufel, Dr., 80809 München (DE)

(57) **Abstract**

The present invention relates to secure RFID systems, methods, and devices. The secure solution in accordance with the present invention provides for the use of a reader signal interception signal device embedded in the secure RFID tag, device that comprises at least means for signal interception receiving a signal emitted from an RFID reader, means for authorization analysing the signal intercepted by the means for signal interception and rendering a decision regarding access to contents embedded in the tag, and response means forwarding the decision to an RFID reader.

## Description

### FIELD OF THE INVENTION

The present invention relates generally to wireless RF (Radio Frequency) communication, and particularly to an electronic tag such as an RFID (Radio Frequency Identification) tag. The present invention further relates to a secure RFID tag, secure communication systems using the secure RFID tag, and to methods manufacturing and using the same.

### BACKGROUND OF THE INVENTION

A primary security concern in the field of RFID is the illicit tracking of RFID tags. Tags which are world-readable pose a risk to both personal location privacy and corporate/military security. Privacy organizations have expressed these security concerns in the context of ongoing efforts to embed electronic product code RFID tags in consumer products and use them for other applications.

A conventional defence against this problem is the use of cryptography to prevent illicit tag reading. Alternatively, tags use a form of "rolling code" scheme, where the tag identifier information changes after each scan, thus reducing the usefulness of observed responses. More sophisticated devices engage in challenge-response authentications where the tag interacts with the reader.

In these protocols, secret tag information is never sent over the insecure communication channel between tag and reader. Rather, the reader issues a challenge to the tag, which responds with a result computed using a cryptographic circuit keyed with some secret value. Such protocols may be based on symmetric or public key cryptography.

Among the disadvantages of these solutions are that cryptographically-enabled tags typically have dramatically higher cost and power requirements than simpler equivalents, and as a result, deployment of these tags is much more limited. This cost/power limitation has led some manufacturers to implement cryptographic tags using substantially weakened, or proprietary encryption schemes, which do not necessarily resist sophisticated attack. Still other cryptographic protocols attempt to achieve privacy against unauthorized readers, though these protocols are largely in the research stage.

One major challenge in securing RFID tags is a shortage of computational resources within the tag. Standard cryptographic techniques require more resources than are available in most low cost RFID devices. RSA Security has patented a prototype device that locally jams RFID signals by interrupting a standard collision avoidance protocol, allowing the user to prevent identification if desired. Various policy measures have also been proposed, such as marking RFID-tagged objects with an industry standard label.

In an effort to make passports more secure, several countries have implemented RFID tags in passports. However, the encryption on UK chips was broken in under 48 hours. Since that incident, further efforts have allowed researchers to illicitly copy passport data while the passport is being mailed to its owner. Where a criminal used to need to secretly open and then reseal the envelope, now can have access to information without detection, adding a further degree of insecurity to the passport system.

A number of products are currently available on the market that will allow a concerned carrier of RFID-enabled cards or passports to shield their data. For example, the United States government requires their new employee ID cards to be delivered with an approved shielding sleeve or holder. There are contradicting opinions as to whether aluminium can prevent reading of RFID chips. Some claims state that aluminium shielding, essentially creating a Faraday cage, does work. Others claim that simply wrapping an RFID card in aluminium foil, only makes transmission more difficult, yet is not completely effective at preventing reading the information on the tags.

Shielding is a function of the frequency being used. Low-frequency LowFID tags, like those used in implantable devices for humans and pets, are relatively resistant to shielding, though thick metal foil will prevent most reads. High frequency HighFID tags (13.56 MHz - smart cards and access badges) are sensitive to shielding and are difficult to read when within a few centimetres of a metal surface. UHF Ultra-HighFID tags (pallets and cartons) are difficult to read when placed within a few millimetres of a metal surface, although their read range is actually increased when the tags is spaced 2-4 cm from a metal due to positive reinforcement of the reflected wave and the incident wave at the tag. UHFID tags can be successfully shielded from most illicit reads by being placed within an anti-static plastic bag.

Other efforts to make the RFID tags more secure to illicit reading are the implementation of complex and costly security measures on the side of the RFID system that comprises the middleware, such as the network and information system components.

Therefore, a need still remains for providing simple, effective and inexpensive solutions to the problem of securing the contents embedded into RFID tags.

### BRIEF SUMARY OF THE INVENTION

The present invention provides a solution to the above needss by proposing in a first aspect a novel secure RFID tag whose security elements are embedded on the side of the tag. To this end the present invention proposes a novel RFID reader signal interception apparatus, comprising means for signal interception receiving a signal emitted from an RFID reader, means for authorization analysing the signal intercepted by said means for signal interception and rendering a decision regarding access to contents embedded in the tag, and response means forwarding said decision to an RFID reader.

The RFID reader signal interception apparatus of the present invention employs as means for signal interception the antenna of the RFID tag to receive the signal emitted from the RFID reader, and is activated by said RFID reader.

In the RFID reader signal interception apparatus of the present invention the means for authorization analyses the signal intercepted by the means for signal interception according to an authorisation scheme. In the RFID reader signal interception apparatus in accordance with the present invention the response means has no direct contact with the RFID reader. The RFID reader signal interception apparatus may either be a passive or an active component.

The solution proposed by the present invention enables a security scheme to be present in the RFID systems specifically embedded on the tag side via the RFID reader signal interception apparatus, security scheme which is based on the configuration of the hardware chip wrapper rather than being only a software only solution, that needs to be implemented in the RFID reader and/or in the system's middleware. As such, it is a cheaper solution that those proposed in the art, since the need for costly security solutions implemented in the information system or database components of the RFID system is eliminated.

In a second aspect, the present invention proposes a secure RFID tag comprising a plurality of RFID reader signal interception apparatuses, wherein at least one of said plurality of RFID reader signal interception apparatuses comprises means for signal interception receiving a signal emitted from an RFID reader, means for authorization analysing the signal intercepted by the means for signal interception and rendering a decision regarding access to the contents embedded in the tag, and response means forwarding the decision to an RFID reader. The secure RFID tag may comprise one or more than one tags, arranged in a layered secure structure.

In a third aspect the present invention proposes a secure RFID system, comprising at least one secure RFID tag interacting with means for reading an RFID tag, means for transmitting the information read from said secure RFID tag, and means for processing and storing the information regarding said RFID tag.

The security scheme proposed by the present invention is an opened security scheme which can be implemented in various ways within the RFID system without constrains related to a given standard. Despite this facility the security scheme allows for customization if said customization is needed.

As previously discussed in the present document, the security scheme of the present invention eliminates the need for the current security solutions that are implemented on the data collector part of the information system. The present invention places the security scheme around the data itself on the tag and is not external to the data. The chip wrapping of data is a low cost solution as it is realised via a passive component which is powered by the RFID reader itself, similarly to a passive RFID tag.

The solution proposed by the present invention despite its location on the tag, is an effective solution since does not permit unauthorized RFID readers to read the tag data despite its simple configuration.

In a forth aspect the present invention proposes a method of manufacturing a secure RFID tag,
comprising at least the steps of manufacturing an integrated circuit for storing and processing information, manufacturing a signal interceptor component of RFID tag for receiving and transmitting a radio frequency signal, adding a further integrated circuit to the RFID tag for receiving the radio frequency signal from the signal interceptor component and analyzing an authorization according to an authorization scheme embedded in the integrated circuit, and adding a relay circuit that transmits the radio frequency signal in both directions.

### BRIEF DESCRIPTION OF THE SEVERAL VIEWS OF THE DRAWINGS

The present invention together with the above and other objects and advantages may best be understood from the following detailed description of the preferred embodiments of the invention illustrated in the drawings, wherein:

FIG. 1 is a schematic and block diagram representation of an exemplary radio frequency identification system, in accordance with the present invention;

FIG. 2 is a schematic representation of data movement within an exemplary RFID system, in accordance with the present invention;

Fig. 3 illustrates an exemplary application environment for the present invention;

Fig. 4 is a schematic and block diagram representation of an exemplary reader signal interception device, in accordance with the present invention;

Fig. 5 illustrates the exemplary secure radio frequency identification (RFID) tag, in accordance with the present invention;

Fig. 6 illustrates a system employing the secure radio frequency identification (RFID) tag in accordance with the present invention; and

Fig. 7 illustrates a flow-chart representation of the method of manufacturing a secure RFID tag, in accordance with the present invention.

### DETAILED DESCRIPTION OF THE INVENTION

The subject matter of the present disclosure is described with specificity herein to meet statutory requirements. However, the description itself is not intended to limit the scope of this patent. Rather, the claimed subject matter might also be embodied in other ways, to include different steps or combinations of steps similar to the ones described in this document, in conjunction with other present or future technologies. Moreover, although the terms "means", "step," "block," and/or "operation" may be used herein to connote different elements of apparatuses or methods employed, the terms should not be interpreted as implying any particular order among or between various steps herein disclosed unless and except when the order of individual steps is explicitly described.

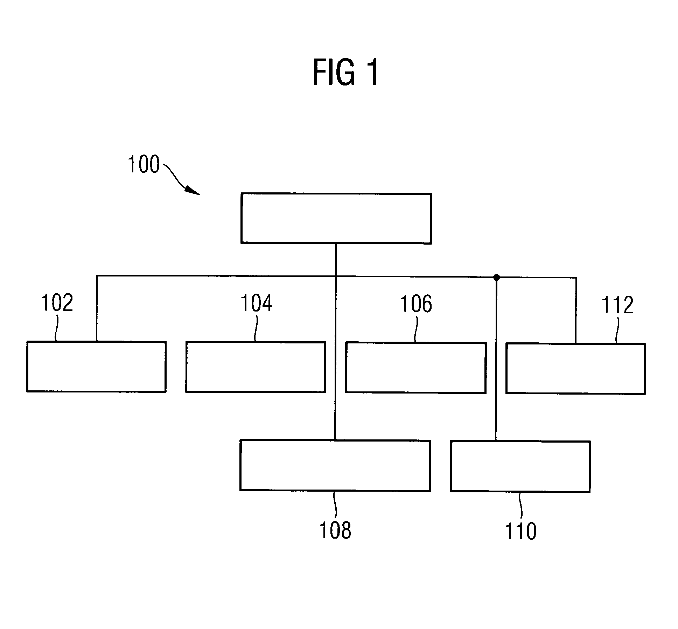

Referring initially to FIG. 1, FIG. 1 is a schematic and block diagram representation of an exemplary radio frequency identification system, in accordance with the present invention.

The exemplary radio frequency identification system 100 comprises at least RFID tags 102, an RFID interrogator 104, such as an RFID reader, and middleware 106 to 112.

The RFID tags 102 in accordance with the present invention consist of at least a microchip and a coupling element, such as an antenna. Most tags are activated only when they are within the interrogation zone of the interrogator, outside of said zone they "sleep". Chip tags can be both read-only (programmed during manufacture) or, at higher complexity and cost, read-write, or both. Chip tags may or may not contain memory. The size of the tag depends on the size of the antenna, which increases with the range of the tag and decreases with frequency.

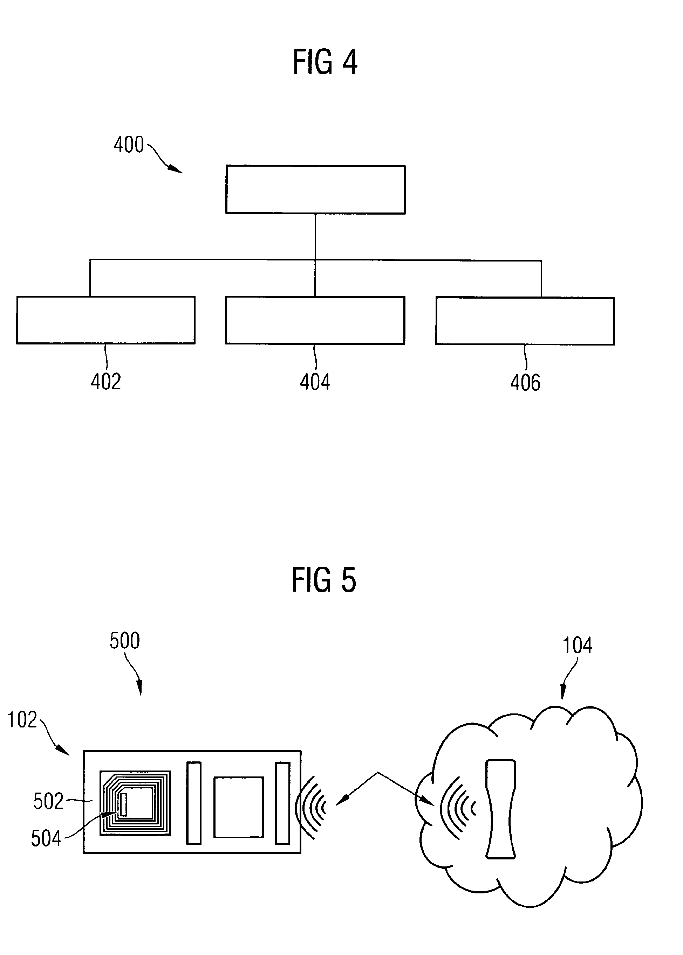

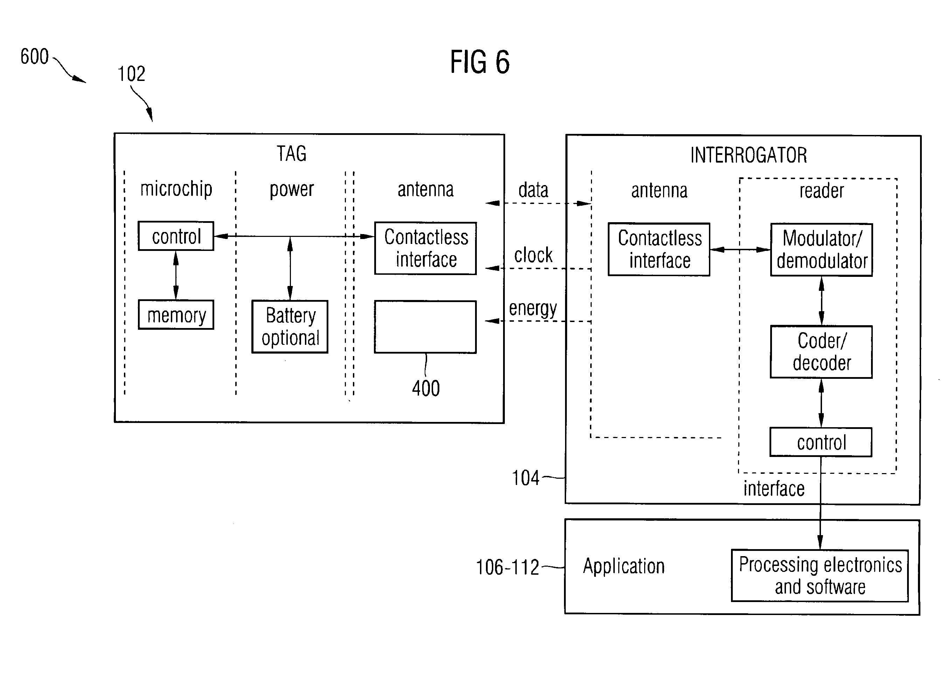

In accordance with the present invention, the RFID tags 102 comprise capabilities that make them suitable for implementing secure information exchanges. As it will be described in detail further in the present document, at least in connection with Figs. 5 and 6, the tags 102 are secure tags. The tags may be either passive or active tags.

The RFID interrogator 104 may be for example an RFID reader. Depending on the application and technology used, some interrogators not only read, but also remotely write to, the RFID tags. For the majority of low cost tags (tags without batteries), the power to activate the tag microchip is supplied by the reader through the tag antenna, when the tag is in the interrogation zone of the reader, as is the timing pulse. These are known as passive tags.

Middleware 106 to 112 is the interface needed between the interrogator and the existing databases and information management software. The middleware comprises for example network 106, information system 108, lookup means 110, and the communication protocols 112.

The cooperation of the above discussed components enables the deployment of a secure radio-frequency identification method, relying on storing and remotelly retrieving information embeded in the tags.

Among the many issues regarding security that are currently raised related to the RFID usage, is for example the collection of data stored in the RFID tags known in the art without prior authorization. As previously discussed, various security schemes were implemented to achieve privacy and security against unauthorized RFID interrogators. However, these solutions such as using cryptographic protocols are of high cost, and have to deal with the underlined information systems from where the RFID interrogators receive encrypted data, which is then transmitted to the RFID applications incorporated into the information system in place, decrypted and used according to the context.

The exemplary radio frequency identification system 100, in accordance with the present invention, offers a low cost solution to the need of securing the information stored in the tag. Especially in the case when the tag is a passive component powered by the RFID interrogator, the solutions proposed by the present invention are very low cost. As it will be described in detail further in the present document, the security scheme is implemented in the tag itself, instead of, as it is known from the art, to be implemented on the side of the RFID information system. The solution proposed by the present invention ensures higher security and easier integration to existing and future produced RFID chips.

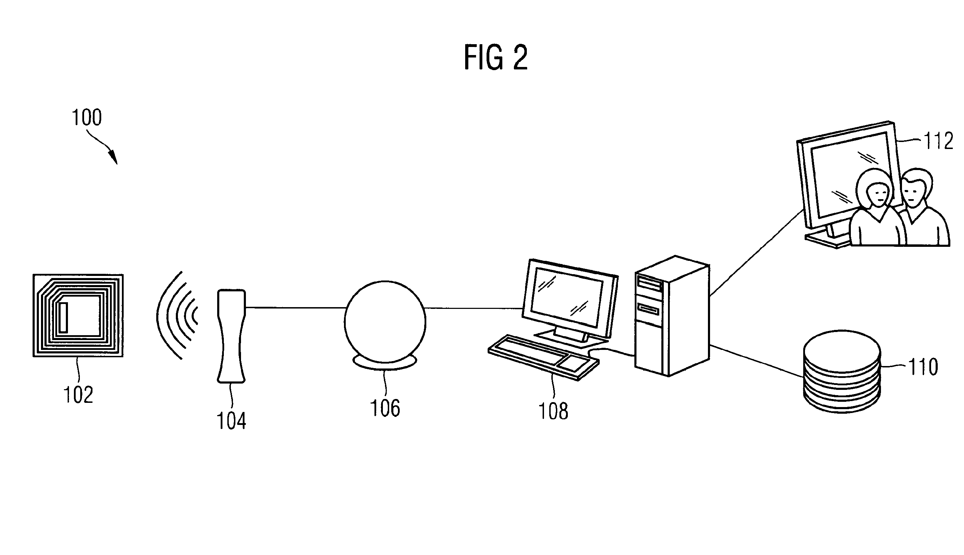

FIG. 2 is a schematic representation of data movement within an exemplary RFID system, in accordance with the present invention.

The field of radiofrequency identification encompasses technologies that use electromagnetic radio waves that are part of the electromagnetic spectrum to identify individual items, places, animals or people. Radio frequency identification can be appropriately implemented for many different uses. It's most common implementation is to use a unique identifier for an object animal or person. The object identifier is stored on an integrated circuit that is attached to an antenna. Together the integrated circuit and the antenna form a secure tag 102 where the object identifier is stored. The secure tag 102 is attached to the object, place, animal or person to be identified. A device 104, called the interrogator or reader communicates with the secure tag 102 and is used to read the identifier data from the secure tag 102. The reader 104 via a data network 106 feeds the identifier read into an information system 108, which stores the identifier in its database 110 or searches its database for the identifier and returns the information stored about the object, place, animal or person to the reader 104.

In the majority of the RFID systems employed today the data stored on the tag 102 is accessible to anyone who is able to operate an RFID reader. In the current RFID applications the decision about who is allowed to access certain data is taken by the collector of said data. The collector can keep the data secret and protected or publish the data and feed it into lookup and location services. Therefore, the security for RFID systems presents serious issues regarding the access, storing and preserving of data. In contrast, the solution proposed by the present invention does not leave the decision regarding access to the RFID reader, but allows the secure tag to be selective regarding which reader will be allowed to access the data on the tag.

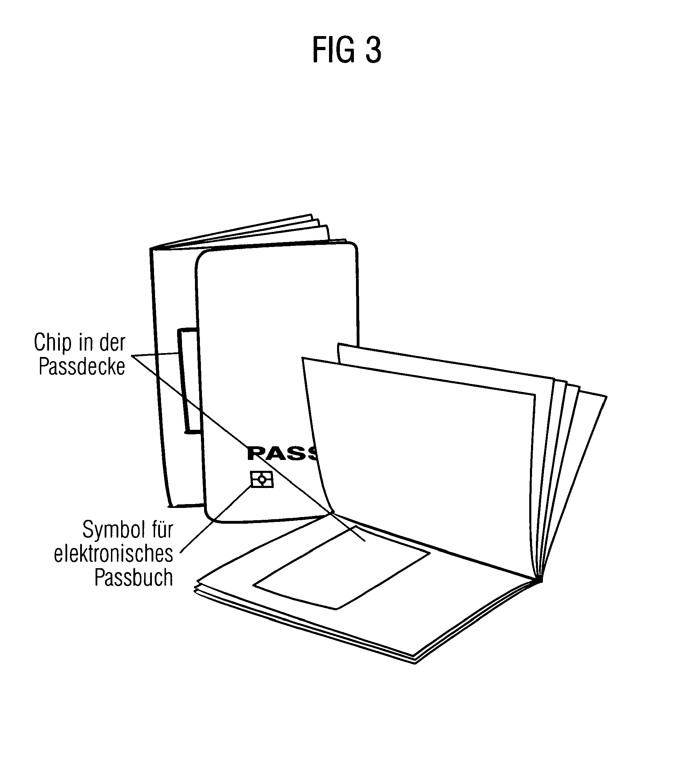

Fig. 3 illustrates an exemplary application environment for the present invention.

As illustrated in figure 3, an example environment that lends itself to the use of RFID chips and to the use of RFID technology to read data embedded in said chips is the electronic passport based on RFID chips. In such an application, it was intended to secure the data stored on the tag with the aid of encryption. Practice has shown that said encryption is not taper resistant and may be broken easily.

Further specific security challenges arise in connection with the information stored on the chips embedded in electronic passports. For example, muggers operating near an airport and capable of remotely retrieving the information embedded in the RFID tags, could selectively target passengers arriving from wealthy countries.

The secure system of the present invention provides a secure mechanism to secure sensitive data that is tamper resistant and allows to protect data privacy. Due to the secure mechanisms provided in the tags of the present invention, the secure RFID system of the present invention allows to: store in secure way the information stored in the tag, the communication protocols are capable to ensure secure communication, and data carried in the tag is securely protected.

To this end, the present invention proposes as a solution a secure tag consisting of an electronic chip that apart from the microchip itself and the coupling element, such as an antenna, comprises as well a Reader Signal Interception chip portion which acts as a wrapper to the electronic chip of the RFID tag. Such a Reader Signal Interception device is illustrated in figure 4.

Fig. 4 is a schematic and block diagram representation of an exemplary reader signal interception device, in accordance with the present invention.

The Reader Signal Interception device 400 comprises the following main components integrated into one electronic device: means for signal interception 402 receiving a signal emitted from an RFID reader 104, means for authorization 404 analysing the signal intercepted by said means for signal interception 402 and rendering a decision regarding access to contents embedded in the tag 102, and response means 406 forwarding said decision to the RFID reader 104. Apart from the above, the reader signal interception device comprises any other means apparent for the person skilled in the art that facilitate the implementation of the security principles of the present invention.

The means for signal interception 402 may be implemented via a signal interceptor component. The component's role is to intercept the signal sent by the RFID reader 104. The means for signal interception 402 is activated as well by the RFID reader at the same time and in the same manner as the RFID tag. This may be accomplished by the signal interception means 402 via the antenna embedded in the RFID tag. The means for signal interception 402 does not allow readers from the outside environment to access the RFID tag. The means for signal interception 402 acts as a buffer. Therefore, the RFID tag 102 is no longer detectable by random RFID readers.

The means for authorization 404 may be implemented via an authorization component, such as a logic unit and a binary comparator. The means for authorization 404 takes the reader signal from the signal interceptor component and analyzes the authorization according to a well defined authorization scheme, which may be implemented in various ways.

One possible implementation is to check regarding the existence of an ID special to the usage context of the RFID tag. The RFID reader first should look up in the database the ID related to the underlying operation, such as reading passport data at a gate from the information system database. The data base may be accessed only by the airport information system after registering the passport in said database. Once the RFID reader is in possession of the special ID, when approaching the tag the tag will permit the reader to access the information on the tag. Should the RFID reader be in possession of the incorrect special ID, the authorisation component will deny the RFID reader access to the information embedded on the tag. Alternately, the RFID reader may belong to a group or to an active directory listing where all the authorized readers authorized to read the tag in accordance to a policy are listed. The authorization components checks if the reader is an authorized reader as listed in the directory.

If authorization fails, the request is simply ignored. Otherwise, the request is passed on to the RFID tag which then delivers back the requested information to a response means 406.

The response means 406 receives the information from the RFID tag, the tag's ID and in return forwards the response to the RFID reader. The response means 406 has no direct contact with the RFID reader 104, permitting therefore the isolation of the RFID reader from the tag. The response means acts as a proxy to deliver the requested RFID ID to the reader, therefore isolating completely the secure RFID tag from its environment.

As a result the secure interrogated tag 102 is completely isolated, due to the presence of the reader signal interception device 400, from random RFID readers that may attempt to inquire regarding or read its contents.

The reader signal interception device 400 may be a passive chip embedded in passive tag, that may be powered by the energy received from the RFID chip. Therefore, the reader signal interception device 400 requires no separate sources of energy such as a battery. Should the reader signal interception device 400 be implemented in an active tag, the device 400 may be powered as well by the battery of the tag.

In environments where the security requirements are higher, or where the reader signal interception device 400 is embedded into active tags, the reader signal interception device 400 may be powered from own energy sources.

Fig. 5 illustrates the exemplary secure radio frequency identification (RFID) tag, in accordance with the present invention.

Figure 5 illustrates a secure RFID tag 102 in accordance with the present invention. The exemplary secure tag 102 of figure 5 is a passive tag, that comprises the electronics tag chip 502 with antenna 504 and a reader signal interception device 400, embedded into the secure tag 102. Illustrated in fig. 5 are the components of the reader signal interception device 400 means for signal interception 402 and means for authorization 404.

The Reader Signal Interception device 400 comprises the following main components integrated into one electronic device: means for signal interception 402 receiving a signal emitted from an RFID reader 104, means for authorization 404 analysing the signal intercepted by said means for signal interception 402 and rendering a decision regarding access to contents embedded in the tag 102, and response means 406 forwarding said decision to the RFID reader 104. Apart from the above, the reader signal interception device comprises any other means apparent for the person skilled in the art that facilitate the implementation of the security principles of the present invention.

The means for signal interception 402 may be implemented via a signal interceptor component. The component's role is to intercept the signal sent by the RFID reader 104. The means for signal interception 402 is activated as well by the RFID reader at the same time and in the same manner as the RFID tag. This may be accomplished by the signal interception means 402 via the antenna embedded in the RFID tag. The means for signal interception 402 does not allow readers from the outside environment to access the RFID tag. The means for signal interception 402 acts as a buffer. Therefore, the RFID tag 102 is no longer detectable by random RFID readers.

The means for authorization 404 may be implemented via an authorization component, such as a logic unit and a binary comparator. The means for authorization 404 takes the reader signal from the signal interceptor component and analyzes the authorization according to a well defined authorization scheme, which may be implemented in various ways.

In the passive tag of Fig. 5 only one reader signal interception device 400 is provided. In environments that require higher security, the tags may be provided with a plurality of reader signal interception devices 400, arranged in various suitable configurations. One possible configuration is a layered secure structure.

Fig. 6 illustrates a system employing the secure radio frequency identification (RFID) tag in accordance with the present invention.

The secure RFID system 600 illustrated in Fig. 6 is an exemplary RFID system provided with the security solution proposed in accordance with the present invention. Secure RFID system 600 comprises a secure RFID tag 102 interacting with means for reading the secure RFID tag 104, means for transmitting the information read from said secure RFID tag 106, and means for processing and storing the information 106 to 112 regarding said RFID tag. The secure tag 102 comprises at least the reader signal interception signal device 400, in accordance with the present invention.

The secure RFID system further comprises means for reading the secure RFID tag 104, means for transmitting the information read from said secure RFID tag 106, and means for processing and storing the information 106 to 112 regarding said RFID tag.
In the secure RFID system the cooperation of the above discussed components enables the deployment of a secure radio-frequency identification method, relying on storing and remotely retrieving information embedded in the tags.

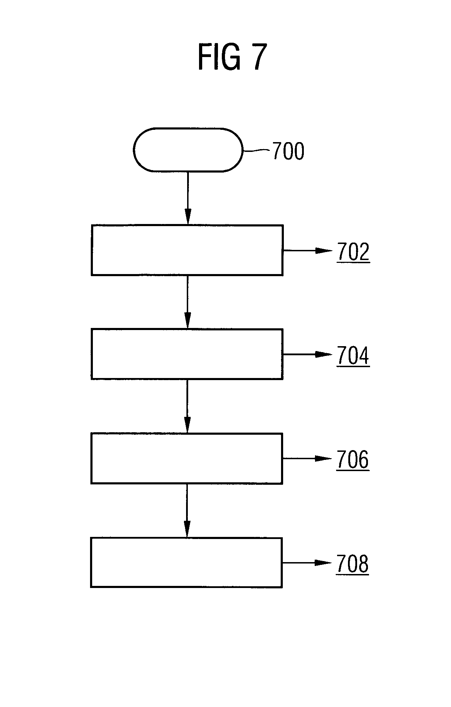

Fig. 7 illustrates a flow-chart representation of the method of manufacturing a secure RFID tag in accordance with of the present invention.
Manufacturing method 700 comprises at least the steps of manufacturing an integrated circuit 702 for storing and processing information, modulating and demodulating a radio-frequency signal, and for other specialized functions, and manufacturing the antenna 704 of the RFID tag for receiving and transmitting the radio frequency signal. Further, the method 700 involves the step 706 of adding an additional chip to the RFID tag. Said chip may be for example a binary comparator. Further, the manufacturing method involves the step 708 of adding the response component. Said response component may be a relay circuit that transmits a signal in both directions.

This written description uses examples to disclose the claimed subject matter, including the best mode, and also to enable any person skilled in the art to practice the claimed subject matter, including making and using any devices or systems and performing any incorporated methods. The patentable scope of the disclosure is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A RFID reader signal interception apparatus, comprising:
means for signal interception receiving a signal emitted from an RFID reader;
means for authorization analysing the signal intercepted by said means for signal interception and rendering a decision regarding access to contents embedded in the tag, and
response means forwarding said decision to an RFID reader.

2. The RFID reader signal interception apparatus of claim 1, wherein said means for signal interception employs an antenna of said RFID tag to receive the signal emitted from the RFID reader.

3. The RFID reader signal interception apparatus of claim 1, is activated by said RFID reader.

4. The RFID reader signal interception apparatus of claim 1, wherein said means for authorization analyses the signal intercepted by said means for signal interception according to an authorisation scheme.

5. The RFID reader signal interception apparatus of claim 1, wherein said response means has no direct contact with the RFID reader.

6. The RFID reader signal interception apparatus of claim 1, wherein the RFID reader signal interception apparatus is a passive component.

7. A secure RFID tag comprising a plurality of RFID reader signal interception apparatuses,
wherein at least one of said plurality of RFID reader signal interception apparatuses comprises
means for signal interception receiving a signal emitted from an RFID reader;
means for authorization analysing the signal intercepted by said means for signal interception and rendering a decision regarding access to the contents embedded in the tag, and response means forwarding said decision to an RFID reader.

8. The secure RFID tag of claim 7, wherein said tag comprises one RFID reader signal interception apparatus.

9. The secure RFID tag of claim 7, wherein the tags in said plurality of tags are arranged in a layered secure structure.

10. A secure RFID system, comprising
a secure RFID tag interacting with
means for reading an RFID tag,
means for transmitting the information read from said secure RFID tag, and
means for processing and storing the information regarding said RFID tag.

11. A method of manufacturing a secure RFID tag, comprising:
manufacturing an integrated circuit for storing and processing information,
manufacturing a signal interceptor component of RFID tag for receiving and transmitting a radio frequency signal,
adding a further integrated circuit to the RFID tag for receiving the radio frequency signal from the signal interceptor component and analyzing an authorization according to an authorization scheme embedded in the integrated circuit, and
adding a relay circuit that transmits the radio frequency signal in both directions.
